(19) Europäisches Patentamt
European Patent Office
Office européen des brevets

(11) **EP 1 724 458 A1**

(12) **EUROPÄISCHE PATENTANMELDUNG**

(43) Veröffentlichungstag:
**22.11.2006 Patentblatt 2006/47**

(51) Int Cl.:
*F02D 41/22* (2006.01)    *F02D 41/12* (2006.01)
*F01N 11/00* (2006.01)    *F02D 41/14* (2006.01)

(21) Anmeldenummer: 05253113.4

(22) Anmeldetag: **19.05.2005**

(84) Benannte Vertragsstaaten:
**AT BE BG CH CY CZ DE DK EE ES FI FR GB GR
HU IE IS IT LI LT LU MC NL PL PT RO SE SI SK TR**
Benannte Erstreckungsstaaten:
**AL BA HR LV MK YU**

(71) Anmelder: **Delphi Technologies, Inc.**
**Troy, MI 48007 (US)**

(72) Erfinder: **Gielen, Guido**
**4920 Bascharage (LU)**

(74) Vertreter: **Jones, Keith William et al**
**Murgitroyd & Company**
**Scotland House**
**165-169 Scotland Street**
**Glasgow G5 8PL (GB)**

(54) **Verfahren und Vorrichtung zur Diagnose eines Messwertes**

(57)    Es wird ein Verfahren zur Diagnose eines Messwertes (10, 12) oder des den Messwert liefernden Sensors (106, 110), wobei der Sensor (106, 110) einer einem Verbrennungsmotor (100) nachgeordneten Abgas-Katalysatoreinheit (108) räumlich und/oder funktional zugeordnet ist, sowie eine nach dem Verfahren arbeitende Vorrichtung angegeben, wobei ein erster Messwert (10) von einem in Strömungsrichtung des Abgases vor der Abgas-Katalysatoreinheit (108) angeordneten ersten Sensor (106) und ein zweiter Messwert (12) von einem in Strömungsrichtung des Abgases nach der Abgas-Katalysatoreinheit (108) angeordneten zweiten Sensor (110) verarbeitet wird, bei dem dass ein spezieller Betriebszustand des Verbrennungsmotors (100) abgewartet oder eingeleitet wird und beim Erreichen des speziellen Betriebszustands überwacht wird, ob erster und zweiter Messwert (10, 12) innerhalb einer vorgegebenen oder vorgebbaren ersten Zeitspanne (18) unter einen ersten Schwellwert (16) sinken.

Fig. 2

**Beschreibung**

Die Erfindung betrifft ein Verfahren zur Diagnose eines Messwertes oder des den Messwert liefernden Sensors, insbesondere eines Messwertes im Abgaszweig eines Verbrennungsmotors sowie eine nach dem Verfahren arbeitende Vorrichtung. Bei dem Messwert im oder aus dem Abgaszweig eines Verbrennungsmotors handelt es sich bevorzugt um einen die Sauerstoffmenge oder -konzentration im Abgas anzeigenden Messwert. Der zugehörige Sensor wird entsprechend als Sauerstoffsensor bezeichnet. Die Erfindung kann vorteilhaft zur Diagnose einer einem Verbrennungsmotor nachgeordneten Abgas-Katalysatoreinheit verwendet werden.

Verfahren und Vorrichtungen zur Diagnose von Messwerten oder des jeweiligen Sensors sind vielfältig bekannt. Häufig wird dabei z.B. ein Signalpfad redundant ausgeführt, indem dem eigentlich zu diagnostizierenden Sensor zumindest ein weiterer Sensor zugeordnet wird und überwacht wird, ob beide Sensoren plausible Signale liefern.

Verfahren und Vorrichtungen zur Diagnose einer einem Verbrennungsmotor nachgeordneten Abgas-Katalysatoreinheit sind vielfältig bekannt. Auch die Verwendung von jeweils einem Sensor am Eingang und am Ausgang der Abgas-Katalysatoreinheit ist bekannt, z.B. aus der US 5,417,061, wobei der zeitliche Abstand zwischen den Punkten zu dem die beiden Sensorsignale ihre Polarität ändern, berechnet wird. Weitere vergleichbare Lösungen sind aus der US 5,319,921 oder der US 6,338,243 bekannt, wobei die Diagnose jeweils bei einem gesättigten Luft/Kraftstoffgemisch erfolgt. Aus der US 6,804,951 ist ein Verfahren bekannt, bei dem ein Zeitversatz zwischen den Signalen der beiden Sensoren ermittelt wird und der ermittelte Zeitversatz zur Diagnose der Abgas-Katalysatoreinheit mit einem Schwellwert verglichen wird. Aus der US 5,771,685 ist ein Verfahren bekannt, das darauf basiert, die Zeitdifferenz zu ermitteln, die für jeden Sensor beim Übergang von einem Messwert, der ein mageres Luft-/Kraftstoffverhältnis kennzeichnet, zu einem Messwert, der ein gesättigtes Luft-/Kraftstoffverhältnis kennzeichnet. In der US 5,743,086 und der US 5,737,917 wird das Verhältnis der Signallängen der beiden Sensoren verwendet um die Abgas-Katalysatoreinheit zur diagnostizieren. Aus der US 5,140,810 ist schließlich ein Verfahren bekannt, bei dem bei einem bestimmten Betriebszustand des Verbrennungsmotors überwacht wird, ob ein erster Messwert für eine Abgaszusammensetzung unten einen bestimmten Schwellwert fällt und ob auch ein zweiter Messwert für die Abgaszusammensetzung unten den bestimmten Schwellwert fällt, wobei von einer Fehlersituation ausgegangen wird, wenn festgestellt wird, dass beide Messwerte unter dem bestimmten Schwellwert liegen.

Der Erfindung liegt die Aufgabe zugrunde ein weiteres Verfahren sowie eine nach dem Verfahren arbeitende Vorrichtung zur Diagnose eines Messwertes oder des den Messwert liefernden Sensors sowie in einer speziellen Ausgestaltung der Erfindung ein Verfahren und eine nach dem Verfahren arbeitende Vorrichtung zur Diagnose einer Abgas-Katalysatoreinheit anzugeben.

Hinsichtlich der Diagnose eines Messwertes wird diese Aufgabe erfindungsgemäß mit den Merkmalen des Anspruchs 1 gelöst. Dazu ist bei einem Verfahren zur Diagnose eines Messwertes oder des den Messwert liefernden Sensors, wobei der Sensor einer einem Verbrennungsmotor nachgeordneten Abgas-Katalysatoreinheit (Katalysator) räumlich zugeordnet ist und wobei ein erster Messwert von einem in Strömungsrichtung des Abgases (Abgasströmungsrichtung) vor der Abgas-Katalysatoreinheit angeordneten ersten Sensor und ein zweiter Messwert von einem in Strömungsrichtung des Abgases nach der Abgas-Katalysatoreinheit angeordneten zweiten Sensor verarbeitet wird, vorgesehen, dass ein spezieller Betriebszustand des Verbrennungsmotors abgewartet oder eingeleitet wird und dass beim Erreichen des speziellen Betriebszustands überwacht wird, ob erster und zweiter Messwert innerhalb einer vorgegebenen oder vorgebbaren ersten Zeitspanne unter einen ersten Schwellwert sinken. Die beiden Sensoren sind insbesondere Sauerstoffsensoren, so dass die beiden Messwerte für den Fall von Sauerstoffsensoren ein Maß für die Sauerstoffkonzentration im Abgas angeben.

Durch die Überwachung, ob beide Messwerte unter einen vorgegebenen oder vorgebbaren ersten Schwellwert sinken ist eine erste Information über die Plausibilität der beiden Messwerte erhältlich. Der eingeleitete spezielle Betriebszustand bewirkt nämlich eine Veränderung des Luft-/Kraftstoffverhältnisses oder geht mit einer solchen Veränderung einher. Die Änderung des Luft-/Kraftstoffverhältnisses verändert auch die Zusammensetzung des Abgases, so dass erwartet werden kann, dass nach einer gewissen Zeit nach Einleitung des speziellen Betriebszustands dies an dem oder an beiden Messwerten ersichtlich ist. Diese Information kann auch als Indikator hinsichtlich des Zustands des Katalysators ausgewertet werden.

Dadurch, dass weiterhin überwacht wird, ob beide Messwerte innerhalb einer vorgegebenen oder vorgebbaren ersten Zeitspanne unter den ersten Schwellwert sinken ist eine weitere Information über die Plausibilität der beiden Messwerte erhältlich. Dadurch dass einer der Sensoren in Abgasströmungsrichtung vor der Katalysatoreinheit und der andere Sensor nach der Katalysatoreinheit angeordnet ist, wirkt die Katalysatoreinheit wie ein Verzögerungsglied. Im Falle von Sauerstoffsensoren verändert sich bei dem speziellen Betriebszustand die Sauerstoffkonzentration im Abgas in Abgasströmungsrichtung vor der Katalysatoreinheit schneller als hinter der Katalysatoreinheit, was insbesondere auf die Fähigkeit der Katalysatoreinheit, Sauerstoff zu speichern, zurückzuführen ist. Die Dauer, bis zu der die Änderung der Sauerstoffkonzentration im Abgas auch nach der Katalysatoreinheit messbar ist, ist damit im Wesentlichen durch die Katalysatoreinheit bestimmt, so dass durch die zweite Zeitspanne eine Zeitdauer vorgegeben werden kann, die dies reflektiert. Diese Information kann insgesamt wiederum auch als Indikator hinsichtlich des Zustands des Katalysators ausgewertet werden. Eine Kombination beider Informationen kann vorteilhaft zur Diagnose des Katalysatorzustands verwendet werden.

Der spezielle Betriebszustand des Verbrennungsmotors ist vorteilhaft ein Zustand in dem dem Verbrennungsmotor kein Kraftstoff zugeführt wird, in dem also der Verbrennungsmotor quasi nur die angesaugte Luft pumpt und als Abgas wieder ausstößt. In diesem Betriebszustand ist die Sauerstoffkonzentration im Abgas besonders hoch, weil ohne Kraftstoff im Verbrennungsmotor keine Verbrennung erfolgt, bei der der angesaugte Sauerstoff verbraucht wird.

Vorteilhaft wird, wenn beide Messwerte innerhalb der ersten Zeitspanne unter den ersten Schwellwert sinken, weiterhin überwacht, ob beide Messwerte während der Dauer einer vorgegebenen oder vorgebbaren zweiten Zeitspanne unterhalb des ersten Schwellwertes verbleiben. Auf diese Art und Weise wird sichergestellt, dass nicht nur ein momentaner Messwert, der möglicherweise sogar fehlerbehaftet war, zur Diagnose herangezogen wird, sondern dass der erste Schwellwert während eines definiten Zeitraums, nämlich der zweiten Zeitspanne, nicht überschritten wird.

Weiter vorteilhaft wird ein Zähler inkrementiert oder dekrementiert wenn einer der beiden Messwerte während der Dauer der zweiten Zeitspanne den ersten Schwellwert überschreitet. Auf diese Art und Weise kann gleichsam protokolliert werden, wie oft der erste Schwellwert überschritten wird. Dabei kann sich der Zähler nur auf die Dauer der zweiten Zeitspanne beziehen, so dass also nur protokolliert wird, wie oft einer der beiden Messwerte den ersten Schwellwert während der Dauer der zweiten Zeitspanne überschreitet. Der Zähler würde dazu bei jeder neuen Ausführung des Verfahrens zurückgesetzt. Genauso kann auch vorgesehen sein, dass bei jeder neuen Ausführung des Verfahrens der zuletzt gültige Zählerstand verwendet wird, so dass protokolliert wird, wie oft einer der beiden Messwerte insgesamt, also auch bei mehreren Ausführungen des Verfahrens, überschritten wird.

Der aktuelle Stand des Zählers wird bevorzugt im Hinblick auf das Erreichen oder Überschreiten eines ersten Zählerschwellwertes überwacht, indem jedem Zähler zumindest ein Zählerschwellwert zugeordnet ist und indem ein Signal generiert wird, wenn der Zählerschwellwert erreicht oder überschritten wird. Wenn das Signal ausgelöst wird, ist der Zählerschwellwert erreicht oder überschritten, so dass das Signal einen Zustand anzeigt, bei dem zumindest einer der beiden Messwerte nicht plausibel ist. Dies liegt dann entweder am Signalpfad, an einem der Sensoren oder an der Abgas-Katalysatoreinheit.

Eine Besonderheit liegt dann vor, wenn zwischen beiden Messwerten während der zweiten Zeitspanne eine merkliche Differenz, also eine Differenz oberhalb eines vorgegebenen oder vorgebbaren weiteren diesbezüglichen Schwellwertes, verbleibt. Dann kann einem der beiden Messwerte diese Differenz als Offset zugeschlagen werden, so dass im Ergebnis die Differenz verschwindet oder zumindest näherungsweise gegen Null geht.

Bei der erfindungsgemäßen Verwendung des Verfahrens zur Diagnose einer Abgas-Katalysatoreinheit kann das Signal z.B. einer Anzeigeeinrichtung, z.B. einer Kontrollleuchte im Armaturenbrett zugeleitet werden, und auf diese Weise zur optischen Signalisierung eines bestimmten Zustands des Katalysators verwendet werden. Wenn das Signal ausgelöst wird, ist der Zählerschwellwert erreicht oder überschritten, so dass das Signal einen suboptimalen Zustand des Katalysators anzeigt. Es können auch mehrere Zählerschwellwerte verwendet werden, wobei bei Erreichen eines ersten solchen Zählerschwellwertes möglicherweise noch gar keine Anzeige im Armaturenbrett erfolgt und wobei bei Erreichen weiterer, nachgeordneter Zählerschwellwerte jeweils eine Anzeige eines ersten, zweiten, usw. "Alterungszustands" des Katalysators angezeigt wird.

Die Erfindung betrifft in gleicher Weise eine Vorrichtung die nach dem Verfahren wie oben beschrieben arbeitet. Dazu weist die Vorrichtung Mittel, z.B. eine Verarbeitungseinheit, insbesondere einem Mikroprozessor oder einen Mikrokontroller, zur Durchführung des Verfahrens auf. Die Verarbeitungseinheit kann dabei z.B. Bestandteil der sogenannten Motorelektronik sein. Ferner kommt als Verarbeitungseinheit auch das Steuerungsgerät der Motorelektronik, das üblicherweise Verarbeitungsfunktionalität nach Art eines Mikroprozessors oder Mikrokontrollers aufweist, in Betracht. Die Verarbeitungseinheit weist zur Aufnahme jedes der beiden Messwerte einen Eingang, z.B. im Falle von sogenannten gemultiplexten Eingängen, oder jeweils einem Eingang für jeden Messwert auf. Zur elektronischen Verarbeitung des oder jedes Messwertes ist selbstverständlich in an sich bekannter Weise eine A/D-Wandlung erforderlich, die entweder in den jeweiligen Sensor oder die Verarbeitungseinheit oder den Signalpfad zwischen Sensor und Verarbeitungseinheit integriert sein kann. Mit dem oder jedem aufgenommenen Messwert kann die Verarbeitungseinheit einen Programmcode abarbeiten, durch den das Verfahren wie oben beschrieben implementiert ist.

Die Erfindung betrifft schließlich auch ein Computerprogrammprodukt, insbesondere ein maschinenlesbares Speichermedium für Computerprogrammdaten, mit Programmcode zur Implementierung des oben beschriebenen Verfahrens, wobei der Programmcode in einen Speicher einer Verarbeitungseinheit der oben beschriebenen Art oder einem einer solchen Verarbeitungseinheit zugeordneten oder zuordenbaren Speicher transferierbar und durch die Verarbeitungseinheit verarbeitbar ist und wobei bei der Verarbeitung des Programmcodes durch die Verarbeitungseinheit die Verfahrensschritte des oben beschriebenen Verfahrens ausgeführt werden.

Die Erfindung geht dabei davon aus, dass eine Diagnose eines Messwertes, insbesondere eines Messwertes, der zentrale Funktionen eines Systems, z.B. eines Verbrennungsmotors beeinflusst, sinnvoll ist um ein Maß für dessen Plausibilität zu erhalten. Im Falle von Sauerstoffsensoren handelt es sich bei dem o.g. ersten Sensor z.B. um die sog.

"Lambda-Sonde", die für die Regelung des Luft-/Kraftstoffverhältnisses maßgeblich ist. Wenn Fehlfunktionen der Lambda-Sonde oder des abgegebenen Messwertes rechtzeitig erkannt werden, kann ein unerwünschter Schadstoffausstoß und/oder eine mögliche Schädigung der Abgas-Katalysatoreinheit verhindert werden oder einer solchen Situation durch rechtzeitige Wartung vorgebeugt werden. Die Erfindung geht dabei weit über die bekannte redundante Ausführung von Sensoren und Sensoreinrichtungen inklusive des jeweiligen Signalpfades hinaus, indem die Signale gezielt in Bezug auf ein "erwartetes Verhalten" untersucht werden. Die Erfindung schlägt in diesem Zusammenhang insbesondere einfache Verfahrensschritte vor, mit denen das erwartete Verhalten erkannt werden kann. Allgemein lässt sich die Erfindung damit auch wie folgt beschreiben: Es wird ein Verfahren zur Diagnose eines Messwertes aus einer Gruppe von mindestens zwei Messwerten oder des den oder jeden Messwert liefernden Sensors angegeben, bei dem ein spezieller Betriebszustand des Systems dem der oder jeder Sensor zugeordnet ist - z.B. des Verbrennungsmotors - abgewartet oder eingeleitet wird und beim Erreichen des speziellen Betriebszustands überwacht wird, ob der oder jeder Messwert ein erwartetes Verhalten zeigt. Das Vorliegen des erwarteten Verhaltens kann sich dann z.B. daran zeigen, dass im Falle von zwei Messwerten beide Messwerte innerhalb einer vorgegebenen oder vorgebbaren ersten Zeitspanne unter einen ersten Schwellwert sinken.

Die Erfindung geht weiter davon aus, dass eine Diagnose einer Abgas-Katalysatoreinheit durchgeführt wird um ein Maß für deren evtl. Schädigung zu erhalten. Gründe für eine Schädigung sind z.B. thermische Alterung sowie chemische oder mechanische Vergiftung. Eine thermische Alterung ergibt sich aufgrund einer stetigen Verringerung der wirksamen Oberfläche des Abgaskatalysators, die wiederum durch Sintervorgänge(Durchlaßvorgänge) hervorgerufen wird. Solche Sintervorgänge beobachtet man vor allem bei hohen Betriebstemperaturen. Wenn die katalytisch wirksame Schicht des Abgaskatalysators durch chemische Reaktion mit Fremdstoffen, z.B. Additiven aus dem verwendeten Kraftstoff oder Öl, unbrauchbar gemacht wird, spricht man von einer chemischen Vergiftung des Abgaskatalysators. Demgegenüber wird als mechanische Vergiftung bezeichnet, wenn die katalytisch wirksame Schicht durch Stoffe aus dem Kraftstoff oder Motoröl, z.B. Blei-, Schwefel- oder Metallverbindungen, abgedeckt und damit stellenweise deaktiviert wird. Wenn solche Schädigungen vorliegen, sinkt die Wirksamkeit des Abgaskatalysators und entsprechend steigt der unerwünschte Ausstoß von Schadstoffen. Das Erkennen des Umfangs evtl. Schädigungen ist also wichtig um einen evtl. nötigen Austausch des Abgaskatalysators anzuzeigen.

Der Vorteil der Erfindung besteht insbesondere darin, dass das Verfahren einfach zu implementieren ist.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Darin zeigen

Fig. 1    eine schematische Darstellung des Abgaszweigs eines Verbrennungsmotors und

Fig. 2    eine schematische Darstellung des zeitlichen Verlaufs von Messwerten, wie sie von einem ersten und einem zweiten Sensor, die in Strömungsrichtung des Abgases vor und nach dem Katalysator angeordnet sind, geliefert werden.

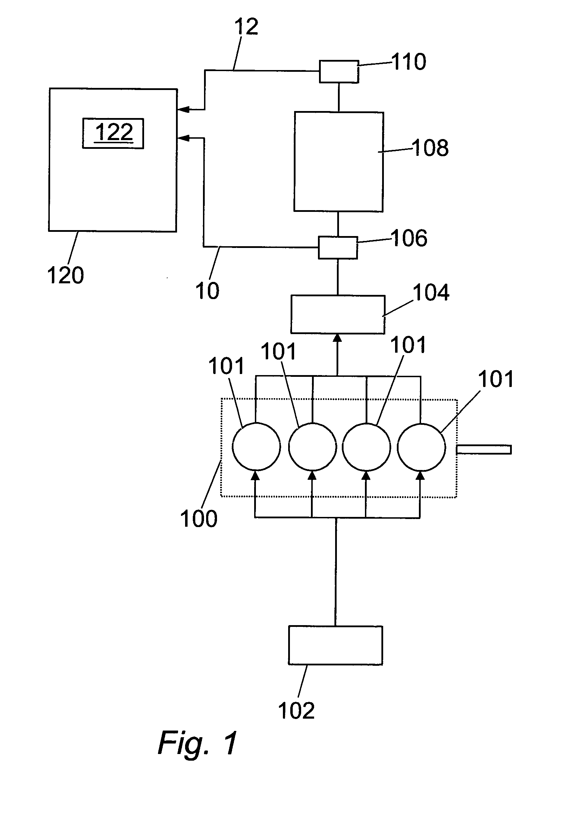

Fig. 1 zeigt eine schematische Darstellung eines Abgaszweigs eines Verbrennungsmotors 100. Der Verbrennungsmotor 100 umfasst in an sich bekannter Weise einer Anzahl von Zylindern 101. Dem Verbrennungsmotor 100 vor- bzw. nachgelagert sind in an sich bekannter Weise jeweils ein Einlasskrümmer 102 sowie ein Auslasskrümmer 104. Im Anschluss an den Auslasskrümmer 104 oder an dessen Ende ist ein erster Sensor 106 angeordnet, der damit in Strömungsrichtung des Abgases vor einer Abgas-Katalysatoreinheit 108 angeordnet ist. Im Anschluss an die Abgas-Katalysatoreinheit 108 ist ein zweiter Sensor 110 vorgesehen. Im weiteren Verlauf des Abgaszweigs sind in nicht dargestellter Weise ein Auspufftopf oder dergleichen sowie sonstige an sich bekannte Elemente des Abgaszweigs eines Verbrennungsmotors 100 angeordnet.

Neben dem Abgaszweig ist schematisch eine Motorelektronik 120 dargestellt, die in an sich bekannter Weise Verarbeitungsfunktionalität aufweist, indem sie einen Mikroprozessor oder Mikrocontroller oder dergleichen (nicht dargestellt) umfasst oder in sonst geeigneter Weise solche Verarbeitungsfunktionalität bereitstellt. Der Motorelektronik 120 ist des Weiteren ein Speicher 122 zugeordnet, in dem z.B. Software gespeichert ist, durch die bestimmte Steuerungs- und/oder Regelungsverfahren mit denen der Verbrennungsmotor 100 oder dem Verbrennungsmotor 100 zugeordnete Aggregate gesteuert, geregelt und/oder überwacht werden können.

Vom ersten und vom zweiten Sensor 106, 110 wird jeweils ein Messwert, erster und zweiter Messwert 10, 12, geliefert, die der Motorelektronik 120 an dafür vorgesehenen Eingängen zugeführt werden.

Bei der Verbrennung von Kraftstoff in dem Verbrennungsmotor 100, z.B. von Benzin in einem Ottomotor, entstehen bekanntlich neben Wasser und Kohlenstoffdioxid die Schadstoffe Kohlenstoffmonoxid und Stickoxide sowie Kohlenwasserstoffe. Mit Hilfe der Abgas-Katalysatoreinheit 108 kann der Schadstoffausstoß verringert werden. Dabei laufen am Katalysator als Bestandteil der Abgas-Katalysatoreinheit 108 folgende Reaktionen ab:

$$2CO + O_2 \rightarrow 2CO_2$$

$$2C_6H_6 + 15O_2 \rightarrow 12CO_2 + 6H_2O$$

$$2NO + 2CO \rightarrow 2CO_2 + N_2$$

Das Kohlenmonoxid wird also zu Kohlenstoffdioxid oxidiert. Die unverbrannten Kohlenwasserstoffe werden zu Wasserdampf und zu Kohlenstoffdioxid oxidiert und die Stickoxide werden zu Stickstoff reduziert. Damit diese drei Reaktionen mit hohen Umsätzen nebeneinander ablaufen können, muss der Sauerstoffanteil im Abgas elektronisch geregelt werden. Die Regelung erfolgt aufgrund des Messwertes einer zwischen Motor und Katalysator angeordneten sog. Lambda-Sonde. Die an sich bekannte Lambda-Sonde ist ein Beispiel für den o.g. ersten Sensor 106. Dabei misst die Lambda-Sonde den Sauerstoffgehalt des Abgases und zwar in Strömungsrichtung des Abgases vor dem Katalysator. Anhand des Messwertes der Lambda-Sonde erfolgt dann, z.B. durch die Motorelektronik 120, die Regelung des Luft-/ Kraftstoffgemisches derart, dass die "Luftzahl" ($\lambda$) möglichst wenig von einem optimalen Wert bei "1.0" abweicht, indem ggf. die Luftzufuhr im Vergaser gedrosselt wird. Die Luftzahl ist wie folgt definiert:

$$\lambda = \frac{Sauerstoffmenge}{st\"ochiometrisch \cdot notwendige \cdot Sauerstoffmenge}$$

Bei $\lambda < 1$ liegt ein fettes Gemisch mit zu wenig Sauerstoff ("Luftunterschuss") und bei $\lambda > 1$ liegt ein mageres Gemisch mit zu viel Sauerstoff vor ("Luftüberschuss").

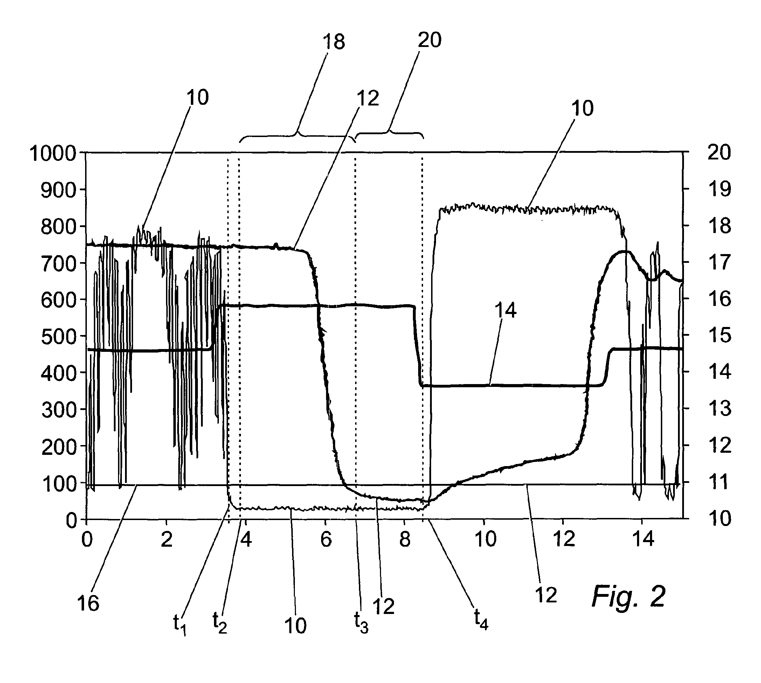

Fig. 2 zeigt eine schematische Darstellung des zeitlichen Verlaufs von Messwerten, wie sie von dem ersten und dem zweiten Sensor 106, 110 in einer Funktionalität als Sauerstoffsensoren geliefert werden. Dargestellt ist der Verlauf des ersten Messwertes 10 sowie der Verlauf des zweiten Messwertes 12. Des Weiteren ist der Verlauf des Luft-/ Kraftstoffverhältnisses 14 dargestellt. Auf der Abszisse ist die Zeit abgetragen. Auf der linken der beiden Ordinaten ist die Stärke des von den beiden Sensoren 106, 110 gelieferten Signals in Millivolt (mV) und auf der rechten Ordinate das Luft-/Kraftstoffverhältnis abgetragen.

Zum Zeitpunkt t1 tritt bei der dargestellten Konstellation ein spezieller Betriebszustand des Verbrennungsmotors 100 ein, der entweder abgewartet wird um bei Erkennen eines solchen Betriebszustands das erfindungsgemäße Verfahren zu starten oder der durch einen ersten Verfahrensschritt des Verfahrens eingeleitet wird um dann die weiteren Verfahrensschritte in diesem Betriebszustand auszuführen. Bevorzugt ist der spezielle Betriebszustand ein Zustand in dem dem Verbrennungsmotor kein Kraftstoff zugeführt wird. Der Betriebszustand beginnt damit z.B. immer dann, wenn ein Fahrer beim Betrieb eines Kraftfahrzeugs während eines gewissen Zeitraums das Gaspedal nicht betätigt, also "den Fuß vom Gas nimmt", oder bei Durchführung eines sog. "intrusive" Tests, bei dem von der Motorsteuerung ein mageres Gemisch vorgegeben aber immer noch eingespritzt wird. Ein solcher Betriebszustand kann z.B. an der Position des Gaspedals, an der Menge des zugeführten Kraftstoffs oder auch an dem Messwert zumindest eines der beiden Sensoren 106, 110, insbesondere an dem Messwert des ersten Sensors 106, erkannt werden.

Vorliegend sinkt beim Beginn des speziellen Betriebszustands zum Zeitpunkt t1 der vom ersten Sensor 106 gelieferte erste Messwert 10 schnell ab. Der erste Messwert unterschreitet dabei relativ bald nach dem Zeitpunkt t1 einen ersten Schwellwert 16. Der vom zweiten Sensor 110 gelieferte zweite Messwert 12 fällt erst mit einiger Verzögerung ab, was sich durch die Fähigkeit des Katalysators, Sauerstoff zu speichern (und zwar insbesondere während der Magerphase mit Sauerstoffüberschuss, wie sie bei dem speziellen Betriebszustand vorliegt, wenn keine Kraftstoffzufuhr erfolgt), erklären lasst. Auch der zweite Messwert 12 fällt nach geraumer Zeit unter den ersten Schwellwert 16 ab.

Wichtig für die Beurteilung der Plausibilität der Messwerte 10,12 und/oder zur Diagnose der Sensoren 106, 110 sowie zur Erkennung eines ordnungsgemäß arbeitenden Katalysators ist, dass beide Messwerte 10, 12 innerhalb einer vorgegebenen oder vorgebbaren ersten Zeitspanne 18 unter den ersten Schwellwert 16 sinken, wobei hier die vorgegebene oder vorgebbare erste Zeitspanne 18 durch den Abstand zwischen zwei Zeitpunkten t2 und t3 angegeben ist. Die erste Zeitspanne 18 kann ohne weiteres auch mit dem Beginn des speziellen Betriebszustands, also mit dem Zeitpunkt t1 beginnen und würde sich entsprechend dann vom Zeitpunkt t1 bis zum Zeitpunkt t3 erstrecken.

Neben der Untersuchung, ob beide Messwerte 10, 12 innerhalb der ersten Zeitspanne 18 unter den ersten Schwellwert 16 sinken, kann das erfindungsgemäße Verfahren durch eine weitere Analyse ergänzt werden, die sich darauf bezieht, dass überwacht wird, ob beide Messwerte 10, 12 während einer vorgegebenen oder vorgebbaren zweiten Zeitspanne 20 unterhalb des ersten Schwellwertes 16 verbleiben. In der Darstellung in Fig. 2 ist die zweite Zeitspanne 20 durch den Abstand zwischen dem Zeitpunkt t3 und einem weiteren Zeitpunkt t4 angegeben.

Wenn zumindest einer der beiden Messwerte 10, 12 während der ersten Zeitspanne 18 nicht unter den ersten Schwellwert 16 sinkt, ist eine Fehlersituation erkannt. Gleichfalls ist eine Fehlersituation erkannt, wenn während der zweiten Zeitspanne 20 zumindest einer der beiden Messwert 10, 12 den ersten Schwellwert 16 überschreitet. Fehlersituation meint in diesem Zusammenhang, dass ein nicht plausibler Messwert 10, 12 erkannt ist. Dies wiederum ist entweder auf eine Fehlerhaftigkeit des Messwertes 10, 12 selbst, auf einen Fehler im jeweiligen Signalpfad oder eine Fehlerhaftigkeit eines der Sensoren 106, 110 sowie schließlich auf eine Schädigung der Abgas-Katalysatoreinheit 108 zurückführbar. Bei jeder dieser beiden Fehlersituationen kann vorgesehen sein, dass ein die Fehlersituation anzeigendes Signal generiert wird, das entweder die Speicherung eines diesbezüglichen Eintrags in einem dafür vorgesehenen Speicher 122 der Motorelektronik 120 oder die Aktivierung eines optischen oder akustischen Meldeelements, z.B. eine Kontrollleuchte im Armaturenbrett, bewirkt.

Alternativ oder zusätzlich ist möglich, dass ein Zähler inkrementiert oder dekrementiert wird, wenn einer der beiden Messwerte 10, 12 innerhalb der zweiten Zeitspanne 20 den ersten Schwellwert 16 überschreitet. Damit kann die Aktivierung eines Meldeelementes der o.g. Art gezielt dann erfolgen, wenn eine bestimmte, vorgegebene oder vorgebbare Anzahl von Fehlersituationen erkannt wird, so dass ein eventuelles Signal an den Fahrer nur dann erfolgt, wenn die Anzahl von Fehlersituationen, oder gegebenenfalls auch eine Häufung von Fehlersituationen in einem bestimmten Zeitraum, einen vorgegebenen oder vorgebbaren Schwellwert überschreitet. Des Weiteren kann vorgesehen sein, dass bei einer solchen Überwachung mehrere Schwellwerte in Betracht gezogen werden, so dass z.B. im Falle von Meldeelementen im Armaturenbrett dem Fahrer der "Alterungszustand" seiner Abgas-Katalysatoreinheit 108 auch z.B. optisch angezeigt werden kann. Die elektrischen Signale, mit denen solcher Meldeelemente angesteuert würden, können selbstverständlich auch durch die Motorelektronik verarbeitet werden, um in einem der Motorelektronik 120 zugeordneten Speicher 122 sämtliche Fehlersituationen, insbesondere mit dem jeweiligen Zeitpunkt des Auftretens, zu speichern, so dass sich bei Wartungsarbeiten am Kraftfahrzeug dieser Speicher 122 auslesen lässt und damit eine lückenlose Information über eventuelle Fehlersituationen in der Abgas-Katalysatoreinheit 108 zur Verfügung steht.

Zusätzlich zur Diagnose der von Messwert 10, 12 oder Sensor 106, 110 sowie der Abgas-Katalysatoreinheit 108 können die vom ersten und zweiten Sensor 106, 110 gelieferten Messwerte 10, 12 auch für weitere Optimierungen verwendet werden. Grundsätzlich ist es so, dass man in einem "idealen" System erwarten würde, dass gegen Ende der zweiten Zeitspanne 20 der erste und der zweite Messwert 10, 12 in etwa identisch sind. Eine bleibende Abweichung, im Folgenden auch als Offset bezeichnet, kann auf verschiedene Art und Weise gemäß einem separaten Aspekt der Erfindung mit eigener erfinderischer Qualität behandelt werden: Zunächst kann danach einer der beiden Messwerte 10, 12 dauerhaft mit dem ermittelten Offset zur Korrektur beaufschlagt werden. Wenn also z.B. ermittelt wird, dass gegen Ende der zweiten Zeitspanne 20 zwischen den beiden Messwerten 10, 12 eine Differenz von z.B. 50 mV verbleibt, kann z.B. der zweite Messwert 12 dauerhaft um diesen Offsetwert, also 50 mV, verringert werden. Des Weiteren kann der ermittelte Offset zusätzlich oder alternativ auch in der Motorelektronik 120 oder einem der Motorelektronik 120 zugeordneten Speicher 122 abgelegt werden, damit der Umstand, dass ein solcher Offset verbleibt, und gegebenenfalls zusätzlich auch der letzte Wert eines solchen Offsets oder eine Folge von ermittelten Offsetwerten, bei Wartungsvorgängen des Kraftfahrzeugs zur Verfügung stehen. Das Wartungspersonal kann dann aus den Daten Rückschlüsse auf die Motoreinstellung ziehen und gegebenenfalls einzelne Einstellungen nachjustieren. Eine Möglichkeit einer solchen Justierung ist die Beaufschlagung eines der beiden Messwerte 10, 12, z.B. des zweiten Messwerts 12, mit einem konstanten Summanden in Anlehnung an den ermittelten Offset oder einen Mittelwert aus der Menge der ermittelten Offsets. Letzteres kommt natürlich sinnvoll nur dann in Betracht, wenn die Motorelektronik, wie oben beschrieben, die Berücksichtigung des Offsets nicht bereits automatisch vorsieht. Das Speichern solcher Daten, also das Speichern des Umstands, dass ein Offset vorliegt, und gegebenenfalls zusätzlich das Speichern einzelner oder mehrerer Offsetwerte, kann auch die Triggerung sog. "Detektion Trouble Codes" (DTC; ISO 15031-6) auslösen, wobei auch solche DTC, wie oben beschrieben, bei Wartungsarbeiten ausgelesen und ausgewertet werden können. Schließlich kann der am Ende der zweiten Zeitspanne 20 verbleibende Unterschied zwischen erstem und zweitem Messwert 10, 12 auch verwendet werden um bei der Regelung des Luft-/Kraftstoffverhältnisses in Abhängigkeit vom Messwert der Lambdasonde, also in Abhängigkeit vom ersten Messwert 10, eine Fehleraufschaltung durch zuführen, indem der Offset, also die ermittelte Differenz zwischen erstem und zweitem Messwert 10, 12 am Ende der zweiten Zeitspanne 20, als Fehler zurückgeführt wird. Die Regelung würde dann nicht nur das erforderlicher Luft-/Kraftstoffverhältnis einstellen sondern auch gewährleisten, dass die Abweichung zwischen erstem und zweitem Messwert 10, 12 am Ende der zweiten Zeitspanne 20 gegen Null geht.

Damit lässt sich die Erfindung kurz wie folgt darstellen:

Es wird ein Verfahren zur Diagnose eines Messwertes 10, 12 oder des den Messwert liefernden Sensors 106, 110, wobei der Sensor 106, 110 einer einem Verbrennungsmotor 100 nachgeordneten Abgas-Katalysatoreinheit 108 räumlich und/oder funktional zugeordnet ist, sowie eine nach dem Verfahren arbeitende Vorrichtung angegeben, wobei ein erster Messwert 10 von einem in Strömungsrichtung des Abgases vor der Abgas-Katalysatoreinheit 108 angeordneten ersten Sensor 106 und ein zweiter Messwert 12 von einem in Strömungsrichtung des Abgases nach der Abgas-Katalysatoreinheit 108 angeordneten zweiten Sensor 110 verarbeitet wird, bei dem dass ein spezieller Betriebszustand des Verbrennungsmotors 100 abgewartet oder eingeleitet wird und beim Erreichen des speziellen Betriebszustands überwacht wird, ob erster und zweiter Messwert 10, 12 innerhalb einer vorgegebenen oder vorgebbaren ersten Zeitspanne 18 unter einen ersten Schwellwert 16 sinken.

Bezugszeichenliste

| 10 | erster Messwert |
|----|----|
| 12 | zweiter Messwert |
| 14 | Luft-/Kraftstoffverhältnis |
|    | (Graph des -es) |
| 16 | erster Schwellwert |
| 18 | erste Zeitspanne |
| 20 | zweite Zeitspanne |
| 100 | Verbrennungsmotor |
| 101 | Zylinder |
| 102 | Einlasskrümmer |
| 104 | Auslasskrümmer |
| 106 | erster Sensor |
| 108 | Abgas-Katalysatoreinheit |
| 110 | zweiter Sensor |
| 120 | Motorelektronik |
| 122 | Speicher |

**Patentansprüche**

1.  Verfahren zur Diagnose eines Messwertes (10, 12) oder des den Messwert liefernden Sensors (106, 110), wobei der Sensor (106, 110) einer einem Verbrennungsmotor (100) nachgeordneten Abgas-Katalysatoreinheit (108) räumlich zugeordnet ist, wobei ein erster Messwert (10) von einem in Strömungsrichtung des Abgases vor der Abgas-Katalysatoreinheit (108) angeordneten ersten Sensor (106) und ein zweiter Messwert (12) von einem in Strömungsrichtung des Abgases nach der Abgas-Katalysatoreinheit (108) angeordneten zweiten Sensor (110) verarbeitet wird,
    **dadurch gekennzeichnet,**
    **dass** ein spezieller Betriebszustand des Verbrennungsmotors (100) abgewartet oder eingeleitet wird und
    **dass** beim Erreichen des speziellen Betriebszustands überwacht wird, ob erster und zweiter Messwert (10, 12) innerhalb einer vorgegebenen oder vorgebbaren ersten Zeitspanne (18) unter einen ersten Schwellwert (16) sinken.

2.  Verfahren nach Anspruch 1,
    wobei der spezielle Betriebszustand ein Zustand ist, in dem dem Verbrennungsmotor (100) kein Kraftstoff zugeführt wird.

3.  Verfahren nach Anspruch 1,
    wobei, wenn beide Messwerte (10, 12) innerhalb der ersten Zeitspanne (18) unter den ersten Schwellwert (16) sinken, überwacht wird, ob beide Messwerte (10, 12) während einer vorgegebenen oder vorgebbaren zweiten Zeitspanne (20) unterhalb des ersten Schwellwertes (16) verbleiben.

4.  Verfahren nach Anspruch 3,
    wobei ein Zähler inkrementiert oder dekrementiert wird, wenn einer der beiden Messwerte (10, 12) innerhalb der zweiten Zeitspanne (20) den ersten Schwellwert (16) überschreitet.

5.  Verfahren nach Anspruch 4,
    wobei zumindest ein Zählerschwellwert für den Stand des Zählers überwacht wird und ein Signal generiert wird, wenn der Zählerschwellwert erreicht wird.

6.  Verfahren nach Anspruch 1, 2 oder 3,
    wobei ein bleibende Abweichung - Offset - zwischen beiden Messwerten (10, 12) während der zweiten Zeitspanne, insbesondere zum Ende der zweiten Zeitspanne, einem der beiden Messwerte (10, 12) zugeschlagen wird.

7.  Verwendung des Verfahrens nach einem der vorangehenden Ansprüche zur Diagnose einer einem Verbrennungsmotor (100) nachgeordneten Abgas-Katalysatoreinheit (108).

8. Diagnosevorrichtung mit Mitteln zur Durchführung des Verfahrens nach einem der Ansprüche 1 bis 7.

9. Diagnosevorrichtung nach Anspruch 8,
   wobei als Mittel zur Durchführung des Verfahrens zumindest eine Verarbeitungseinheit, insbesondere ein Mikroprozessor oder ein Mikrocontroller, vorgesehen ist, die zur Aufnahme jedes der beiden Messwerte (10, 12) einen Eingang oder jeweils einen Eingang aufweist und
   wobei die Verarbeitungseinheit einen Programmcode abarbeitet, durch den das Verfahren nach einem der Ansprüche 1 bis 5 implementiert ist.

10. Computerprogrammprodukt, insbesondere Speichermedium für Computerprogrammdaten, mit Programmcode zur Implementierung des Verfahrens nach einem der Ansprüche 1 bis 7,
    der in einen Speicher einer Verarbeitungseinheit, insbesondere ein Mikroprozessor oder ein Mikrocontroller, oder einen einer solchen Verarbeitungseinheit zugeordneten Speicher transferierbar und durch die Verarbeitungseinheit verarbeitbar ist,
    wobei bei der Verarbeitung des Programmcodes durch die Verarbeitungseinheit die Verfahrensschritte des Verfahrens nach einem der Ansprüche 1 bis 7 ausgeführt werden.

*Fig. 1*

Fig. 2

**Europäisches Patentamt**

**EUROPÄISCHER RECHERCHENBERICHT**

Nummer der Anmeldung

EP 05 25 3113

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | US 2004/261755 A1 (SEGAWA MAKOTO ET AL) 30. Dezember 2004 (2004-12-30) | 1,2,8-10 | F02D41/22 F02D41/12 F01N11/00 F02D41/14 |
| Y | * Absätze [0008] - [0014] * <br> * Absätze [0075], [0077] * <br> * Abbildung 1 * | 3-7 | |
| | ----- | | |
| X | EP 1 247 966 A (AUDI AG) 9. Oktober 2002 (2002-10-09) * Absätze [0007] - [0013] * * Absätze [0016] - [0018] * * Abbildungen * | 1,2,8-10 | |
| | ----- | | |
| Y | DE 197 33 107 A1 (SIEMENS AG, 80333 MUENCHEN, DE; SIEMENS AG) 18. Februar 1999 (1999-02-18) | 7 | |
| A | * Zusammenfassung * * Seite 3, Zeile 16 * * Seite 4, Zeile 56 - Seite 5, Zeile 20 * * Abbildungen 1,2,4 * | 1,2,8-10 | |
| | ----- | | |
| Y | US 6 136 169 A (OKAMOTO ET AL) 24. Oktober 2000 (2000-10-24) * Zusammenfassung * * Spalte 8, Zeile 55 - Spalte 9, Zeile 47 * * Abbildungen 7-12 * | 3-5 | RECHERCHIERTE SACHGEBIETE (Int.Cl.7) F02D F01N |
| | ----- | | |
| Y | US 5 417 099 A (OHUCHI ET AL) 23. Mai 1995 (1995-05-23) * das ganze Dokument * | 6 | |
| | ----- | | |
| A | DE 103 39 325 A1 (VOLKSWAGEN AG) 31. März 2005 (2005-03-31) * das ganze Dokument * | 1-10 | |
| | ----- | | |

Der vorliegende Recherchenbericht wurde für alle Patentansprüche erstellt

| Recherchenort | Abschlußdatum der Recherche | Prüfer |
|---|---|---|
| Den Haag | 14. Oktober 2005 | Libeaut, L |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

......................................................................

& : Mitglied der gleichen Patentfamilie, übereinstimmendes Dokument

EPO FORM 1503 03.82 (P04C03)

**EP 1 724 458 A1**

**ANHANG ZUM EUROPÄISCHEN RECHERCHENBERICHT**
**ÜBER DIE EUROPÄISCHE PATENTANMELDUNG NR.**  EP 05 25 3113

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

14-10-2005

| Im Recherchenbericht angeführtes Patentdokument | | Datum der Veröffentlichung | Mitglied(er) der Patentfamilie | | Datum der Veröffentlichung |
|---|---|---|---|---|---|
| US 2004261755 | A1 | 30-12-2004 | JP | 2005002813 A | 06-01-2005 |
| EP 1247966 | A | 09-10-2002 | DE | 10117244 A1 | 07-11-2002 |
| DE 19733107 | A1 | 18-02-1999 | FR | 2767198 A1 | 12-02-1999 |
| | | | US | 6439038 B1 | 27-08-2002 |
| US 6136169 | A | 24-10-2000 | JP | 11107830 A | 20-04-1999 |
| US 5417099 | A | 23-05-1995 | DE | 4420818 A1 | 17-08-1995 |
| | | | JP | 3188579 B2 | 16-07-2001 |
| | | | JP | 7224705 A | 22-08-1995 |
| DE 10339325 | A1 | 31-03-2005 | FR | 2859241 A1 | 04-03-2005 |

EPO FORM P0461

Für nähere Einzelheiten zu diesem Anhang : siehe Amtsblatt des Europäischen Patentamts, Nr.12/82

12

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5417061 A
- US 5319921 A
- US 6338243 B
- US 6804951 B
- US 5771685 A
- US 5743086 A
- US 5737917 A
- US 5140810 A